# EUROPÄISCHE PATENTSCHRIFT

(11) **EP 3 320 771 B1**
(45) Veröffentlichungstag und Bekanntmachung des Hinweises auf die Patenterteilung: **02.10.2024**
(21) Anmeldenummer: 17200629.8
(22) Anmeldetag: 08.11.2017
(51) Int. Cl.: A01K 5/02, A01K 5/01

(54) **FUTTERANLAGE MIT TROGREINIGUNG**
ANIMAL FEEDING SYSTEM WITH TROUGH PURIFICATION
INSTALLATION D'ALIMENTATION DOTÉE DE DISPOSITIF DE NETTOYAGE D'AUGE

(30) Priorität: 11.11.2016 AT 5023716 U
(43) Veröffentlichungstag der Anmeldung: 16.05.2018
(73) Patentinhaber: Schauer Agrotronic GmbH, 4731 Prambachkirchen (AT)
(72) Erfinder: SCHÖNBAUER, Hubert, 4722 Peuerbach (AT)
(74) Vertreter: Burger, Hannes

(56) Entgegenhaltungen:
- EP-A1- 0 595 784
- EP-A1- 0 696 420
- EP-A1- 2 092 821
- EP-A2- 2 363 630
- AT-U1- 11 851
- US-A1- 2009 078 209

## Beschreibung

Die vorliegende Erfindung betrifft eine Anordnung und ein Verfahren zur Versorgung von Tieren mit Futter, entsprechend den Oberbegriffen der unabhängigen Ansprüche.

Im Bereich der Tiermast und Aufzucht wird ein Fütterungsverfahren auf der Basis von angemischtem Futter in flüssiger Form verwendet. Bei dieser Art von Fütterung werden in der Regel Mehle, Pflanzenprodukte wie zerkleinertes Gemüse, wie Rüben, Mais und Rohfaserstoffe mit einer Anmischflüssigkeit oder einer anderen nährstoffhaltigen Flüssigkeit, wie zum Beispiel Molke und Milchpulver, gemischt. Der Vorteil einer solchen Flüssigfütterung ist, dass den Tieren die erforderlichen Kalorien, Zusatzstoffe und die notwendige Flüssigkeit in einem Schritt in einer gut und kontrolliert mischbaren und weitgehend homogenen Masse zugeführt werden kann. Die genauen Zusammensetzungen von flüssigen Futtermischungen können je nach Bedarf auf die Tierart, Rasse, Geschlecht, Alter und Gesundheitszustand der Tiere angepasst werden. In den Mastbetrieben wird die Flüssigfütterung in der Regel in Mischbehälter aus Edelstahl durch Anrühren vorbereitet und anschließend mittels einer Druckpumpe durch ein Rohrsystem den Tieren zugeleitet. Diese Anordnungen können zudem weiter mit Steuerelementen ausgestattet sein, welche die notwendige Futtermenge automatisch und in definierten Intervallen zu den Tieren führen. Spezielle Sensoren können außerdem die verabreichte Futtermenge direkt am Trog messen und mittels einer Steuerung kann dafür gesorgt werden, dass ein stetiger Nachschub an Futtermittel besteht. Eine Anordnung gemäß dem Oberbegriff von Anspruch 1 ist aus der EP0696420A1 bekannt geworden

Durch den hohen Grad an Automatisierung, welche eine Flüssigfutterverabreichung ermöglicht, ergeben sich insbesondere beim Personal erhebliche Einsparungen. Ein Problem bei bestehenden Flüssigfutteranlagen ist aber die Hygiene. Nicht verbrauchtes Futter muss aus den Trögen und den Rohrleitungen entfernt werden, damit es nicht verdirbt und die Gesundheit der Tiere beeinträchtigt. Das Reinigen der Tröge ist allerdings arbeitsintensiv, da die Tröge mindestens einmal am Tag manuell vom alten Futter befreit und gereinigt werden müssen. Dabei wird speziell bei Ferkel in der Regel die gesamte Schale entnommen und gereinigt, oder mit einem Schlauch die Schale abgespritzt. Alternativ gibt es auch Verfahren, bei dem mittels einem Nass- und/oder Trockensaugers die Schale leer gesaugt werden kann. All diesen Verfahren gemeinsam ist allerdings, dass sie einen großen Zeit- und Arbeitsaufwand bedingen.

Es besteht somit ein Bedürfnis nach Anlagen der eingangs geschilderten Art, welche einen geringeren Wartungsaufwand benötigen. Insbesondere besteht ein Bedürfnis nach Wartungsanlagen, welche ein weitgehend automatisierbares Trogreinigungssystem umfassen.

Es ist somit eine Aufgabe der vorliegenden Erfindung eine Anordnung zur Versorgung von Tieren mit Futter bereitzustellen, welche mindestens einen Nachteil des Bekannten überwindet, insbesondere welche einen geringeren Reinigungsaufwand aufweist.

Diese Aufgabe wurde mit einer Anordnung zur Versorgung von Tieren mit Futter gemäß kennzeichnendem Teil des unabhängigen Anspruches gelöst.

Ein Aspekt der vorliegenden Erfindung betrifft eine Anordnung zur Versorgung von Tieren mit Futter, insbesondere zur Versorgung von Masttieren, besonders bevorzugt Schweinen. Die Anordnung umfasst mindestens einen Futtertank zur Fassung eines Volumens an Futter. Dieser Futtertank ist mit mindestens einer Pumpe wirkverbunden, so dass das Futter aus dem Futtertank in einem Leitungssystem befördert werden kann. Die Anordnung umfasst weiter mindestens eine Ringleitung mit Ringventilen und einer Mehrzahl an Ausläufen. Die Ringleitung ist so angeordnet, dass eine Fluidverbindung zwischen dem Futtertank, dem Leitungssystem und mindestens einer Trogschüssel hergestellt werden kann. Durch diese Fluidverbindung kann im Betrieb das Futter vom Futtertank mittels der Pumpe zu den Trogschüsseln befördert werden. Die Anordnung umfasst weiter ein Ablaufrohr je Ablauf, welches über ein Futterstellenventil mit jeweils einem Ablauf der mindestens einen Ringleitung verbunden ist. Die Anordnung ist dadurch gekennzeichnet, dass das Ablaufrohr im Wesentlichen senkrecht zur Trogschüssel angeordnet ist. Dabei ist die Trogschüssel so ausgestaltet, dass sie eine auf eine Mündung des Ablaufrohres weisende, im Wesentlichen konische Erhebung aufweist.

Durch die im Wesentlichen konische Erhebung der Trogschüssel kann diese leichter von Futterresten befreit werden, in dem die Spitze des Konus mit einem Reinigungsstrahl beaufschlagt wird.

Im Sinne der vorliegenden Erfindung sei im Wesentlichen konisch als eine Erhebung zu verstehen, welche sich von einer im Vergleich zur Spitze breiteren Basis hin verjüngt. In einer besonderen Ausführungsform ist die Trogschüssel eine runde Schüssel mit einem äußeren Rand, einem Schüsselboden und einer sich in der Mitte der Schüssel im Wesentlichen konisch nach oben erhebenden Erhebung. Dabei bildet der Schüsselboden einen Ring um die im Wesentlichen konische Erhebung. Die im Wesentlichen konische Erhebung kann in einer Spitze, einer Abrundung oder einer Fläche enden.

In einer bevorzugten Ausführungsform umfasst der Futtertank mindestens ein Rührwerk zum Anrühren einer Futtermischung.

Als geeignetes Futter sei im Sinne der vorliegenden Erfindung sämtliche Futtermischungen zu verstehen, welche eine Rheologie aufweisen, die es ihnen gestatten innerhalb der Anordnung, insbesondere den Leitungen, ein fluides Verhalten zu zeigen.

Das Leitungssystem umfasst auch eine Pressluftzufuhr und/oder eine Wasserzufuhr. Durch die Zufuhr von Pressluft und/oder Wasser kann die entsprechende Beaufschlagung der Trogschüssel stattfinden. Die Zufuhr von Pressluft und/oder Wasser ist durch ein entsprechendes Pressluftventil und/oder Wasserinjektionsventil regelbar.

Die oben genannte Aufgabe wird mit einem Verfahren der eingangs genannten Art erfindungsgemäß durch die Merkmale des kennzeichnenden Teils von Anspruch 2 gelöst. Beim Verfahren wird in einem ersten Schritt Futtermittel durch einen Futtermitteltank zu einem homogenen Fluid verrührt und über eine Pumpe in eine Ringleitung befördert. Diese Ringleitung mündet in eine Mehrzahl an Trogschüsseln mit mittigen, im Wesentlichen konischen Erhebungen unter den Mündungen. In einem zweiten Schritt wird ein Hauptventil geschlossen und somit die Beförderung des Futtermittels in die Ringleitung unterbunden. Ein Vorlaufventil und ein Rücklaufventil werden geöffnet, sodass ein geschlossener Kreislauf bei geschlossenen Futterstellenventilen mit dem Futtermitteltank und der Ringleitung besteht. Anschließend wird über ein Ventil Pressluft in die Ringleitung geführt. Anschließend wird das Rücklaufventil geschlossen, womit die Pressluft nicht mehr zurück in den Anmischtank strömen kann und die Futterstellenventile geöffnet, sodass die Pressluft aus den Ausläufen ausgetrieben wird, direkt auf die konischen Erhebungen der Trogschüsseln.

Ein Aspekt der vorliegenden Erfindung betrifft die Verwendung einer eingangs geschilderten Anordnung in der Schweinehaltung, insbesondere der Aufzucht und Fütterung von Ferkeln.

Zum besseren Verständnis der Erfindung wird diese nun anhand der nachfolgenden Figuren näher erläutert, ohne jedoch auf diese eingeschränkt zu sein. Für einen Fachmann ergeben sich auf der Basis dieser erläuternden Figuren weitere vorteilhafte Ausführungsformen der vorliegenden Erfindung.

Die Figuren zeigen schematisch:
- Fig. 1: eine erfindungsgemäße Anordnung für die Zufuhr von Futter an Schweinen, und
- Fig. 2: die erfindungsgemäßen Trogschüsseln der Anordnung aus der Fig. 1.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

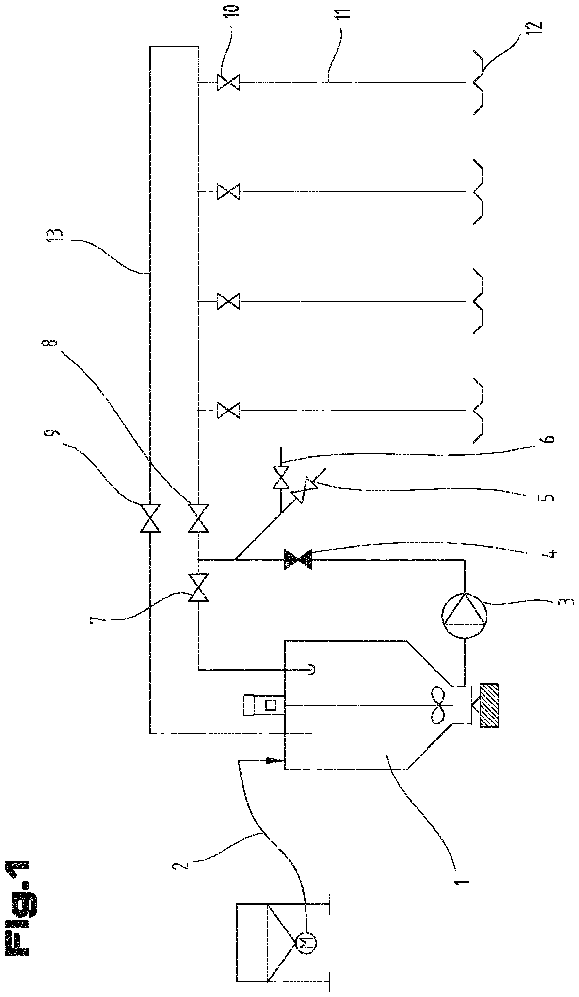

Fig. 1 zeigt schematisch eine erfindungsgemäße Anordnung. Die Anordnung weist zur besseren Erläuterung auch eine fakultative Zubringerschnecke 2 auf, welche mit einem Futtersilo verbunden ist und jeweils die entsprechende Futtermischung oder die einzelnen Futterbestandteile in einen Anmischtank mit Rührwerk befördert. Selbstverständlich kann dies alternativ händisch geschehen und/oder es kann eine Reihe an Zubringerschnecken 2 vorgesehen sein, welche jeweils mit einem besonderen Futterbestandteil verbunden sind, welcher im Anmischtank mit Rührwerk 1 zur entsprechenden fertigen Futtermischung verrührt wird.

Dem Anmischtank mit Rührwerk 1 nachgeordnet ist die Pumpe 3, welche die Beförderung der Futtermischung durch die Anordnung besorgt. Die Art der Pumpe 3 kann vom Fachmann für die spezifische Wahl der Futtermischung, und abgestimmt auf die entsprechende Anlage gewählt werden. Geeignet sind insbesondere Schneckenverdrängerpumpen, Impellerpumpen oder Kreiselpumpen. Bevorzugt sind Pumpen, welche frequenzgeregelt sind. Die Pumpe 3 ist über ein Leitungssystem mit einer Ringleitung 13 verbunden, welche sich vom Futtertank 1 bis zu den Futterstellen erstreckt. Es können natürlich mehrere Ringleitungen 13 vorhanden sein. Das Leitungssystem und die Pumpe 3 sind mittels eines Hauptventils 4 bezüglich dieser Ringleitung 13 geregelt. In das Leitungssystem mündet weiter ein Injektor, welcher dem Hauptventil nachgeordnet ist und ein Pressluftventil 6 und ein Wasserinjektionsventil 5 umfasst. Für die Ausübung des erfindungsgemäßen Konzeptes reicht aber bereits die Zufuhr eines dieser beiden Medien Pressluft oder Wasser. Diese Ventile sind jeweils mit einem entsprechenden Pressluftbehälter oder einem Kompressor und/oder einer Wasserzufuhr verbunden (in der Figur nicht gezeigt).

Wie bereits geschildert, erstreckt sich die Ringleitung 13 vom Futtertank 1 bis hin zu den Futterstellen. Dem Leitungssystem und der Pumpe 3 und dem Hauptventil 4 nachgeordnet umfasst die Ringleitung 13 ein Vorlaufventil 8. Diesem folgt eine Mehrzahl an Ausläufen, welche jeweils durch ein Futterstellenventil 10 in ein Ablaufrohr 11 übergehen. Die Ablaufrohre 11 münden in mittig kegelig ausgeführte Trogschüsseln 12. Die in der Fig. 1 gezeigten vier Ablaufrohre 11 sind rein exemplarisch in ihrer Anzahl und es versteht sich von selbst, dass die Anzahl an Ablaufrohren 11 vom Fachmann an die Größe der jeweiligen Anlage skalierbar ist.

Die Futterstellenventile 10 sind dem Vorlaufventil nachgelagert. Den Futterstellenventilen 10 weiter nachgelagert, ist ein an der Ringleitung 13 angebrachtes Rücklaufventil 9. Die Ringleitung 13 mündet an beiden Enden in den Anmischtank mit Rührwerk 1.

Im Betrieb fördert die Pumpe 3 über das offene Hauptventil 4 die Futtermasse in die Ringleitung 13, wobei bei offenem Vorlaufventil 8 das Futtermittel zu den Futterstellenventilen 10 gefördert wird und dieses über die Ablaufrohre 11 in die Trogschüsseln 12 mündet.

Soll die Anordnung gereinigt werden, so wird zunächst das Hauptventil 4 geschlossen. Anschließend wird mit offenem Vorlaufventil 8 und offenem Rücklaufventil 9 ein Wasser-Pressluftgemisch durch die Ringleitung 13 geblasen, so dass allfällige Rückstände in der Ringleitung 13 in den Anmischtank mit Rührwerk 1 geblasen werden. Zur Reinigung der Trogschüsseln 12 wird im Anschluss das Rücklaufventil 9 geschlossen und die Futterstellenventile 10 geöffnet. Die Pressluft und/oder das Pressluft- Wassergemisch strömt von der Ringleitung 13 über die Futterstellenventile 10 durch die Ablaufrohre 11 zu den Trogschüsseln 12. Durch die spezielle Form der Trogschüsseln 12 mit ihren auf die Mündung des Ablaufrohres 10 weisenden, im Wesentlichen konischen Erhebungen werden die Trogschüsseln 12 optimal ausgeblasen.

Geeignete Zwei- oder Dreiwege-Ventile für die erfindungsgemäße Anordnung sind dem Fachmann bekannt. Insbesondere Magnetventile oder pneumatische Ventile sind geeignet.

Die gezeigte Anordnung ist besonders für die Aufzucht von Ferkeln, der Schweinezucht und der Schweinemast geeignet, wo hohe hygienische Anforderungen an die Futterversorgung und die Anlage bestehen.

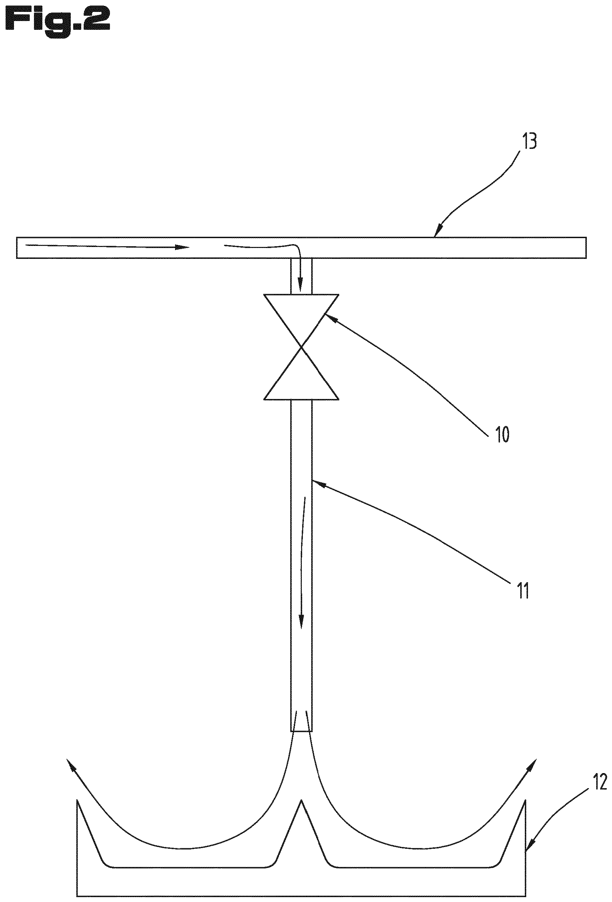

In der Fig. 2 ist der Reinigungseffekt an den Futterstellen illustriert. Über die Ringleitung 13 strömt durch das offene Futterstellenventil 10 Pressluft durch das Ablaufrohr 11 direkt auf die mittige konische Erhebung einer erfindungsgemäßen Trogschüssel 12. Dadurch wird der Schalenboden der Trogschüssel 12 von der entstehenden Beaufschlagung mit Luft gereinigt. Die in der Fig. 2 illustrierte Trogschüssel 12 ist im Querschnitt gezeigt.

Der Pfad des Fluids während des Reinigungsprozesses ist in der Fig.2 mittels der Pfeile dargestellt.

Der Ordnung halber sei abschließend darauf hingewiesen, dass zum besseren Verständnis des Aufbaus Elemente teilweise nicht massstabsgetreu und/oder vergrößert und/oder verkleinert dargestellt wurden.

### Bezugszeichenaufstellung

- 1: Futtertank
- 2: Zubringerschnecke
- 3: Fütterungspumpe
- 4: Hauptventil
- 5: Wasserinjektionsventil
- 6: Pressluftventil
- 8: Vorlaufventil
- 9: Rücklaufventil
- 10: Futterstellenventil
- 11: Ablaufrohr
- 12: Trogschüssel
- 13: Ringleitung

## Patentansprüche

1. Anordnung zur Versorgung von Tieren mit Futter, umfassend:
a) mindestens einen Futtertank (1) zur Fassung eines Volumens an Futter, wobei der Futtertank (1) wirkverbunden ist mit mindestens einer Pumpe (3), zur Beförderung des Futters;
b) mindestens eine in den Futtertank (1) mündende Ringleitung (13), mit einem Vorlaufventil (8), einem in einer Austeilrichtung des Futters nach dem Vorlaufventil (8) angeordneten Rücklaufventil (9), und eine Mehrzahl an zwischen dem Vorlaufventil (8) und dem Rücklaufventil (9) angeordneten, Ausläufen für das Futter aufweist, wobei die Ausläufe jeweils über ein Futterstellenventil (10) mit einem in eine Trogschüssel (12) mündenden Ablaufrohr (11) verbunden sind;
c) ein Hauptventil (4) zur Regelung der Beförderung des Futters von dem Futtertank (1) in die Ringleitung (13), wobei das Hauptventil (4) der Pumpe (3) nachgeschaltet und dem Vorlaufventil (8) vorgeschaltet ist;
d) eine Pressluftzufuhr mit einem Pressluftventil (5) zur Regelung einer Zufuhr von Pressluft in die Ringleitung (13) und/oder eine Wasserzufuhr mit einem Wasserinjektionsventil (6) zur Regelung der Zufuhr von Wasser in die Ringleitung (13), wobei die Pressluftzufuhr und/oder die Wasserzufuhr dem Hauptventil (4) nachgeschaltet und dem Vorlaufventil (8) vorgeschaltet ist,
e) wobei bei geöffnetem Vorlaufventil (8), geöffnetem Rücklaufventil (9) und geschlossenem Hauptventil (4) ein Rückstand an Futtermittel bei Durchströmung der Ringleitung (13) mit einem Fluid in den Futtertank (1) geblasen ist;
**dadurch gekennzeichnet, dass** das Ablaufrohr (11) im Wesentlichen senkrecht zur Trogschüssel (12) angeordnet ist und die Trogschüssel (12) eine auf eine Mündung des Ablaufrohres (11) weisende, im Wesentlichen konische Erhebung aufweist, wobei bei geschlossenem Rücklaufventil (9), und geschlossenem Hauptventil (4) und geöffnetem Vorlaufventil (8) sowie geöffnetem Futterstellenventil (10) ein Rückstand an Futtermittel in der Trogschüssel (12) durch Beaufschlagung durch ein Fluid über die Mündung des Ablaufrohres (11) auf die im Wesentlichen konische Erhebung der Trogschüssel (12) aus dieser geblasen ist.

2. Verfahren zur Reinigung einer Anordnung zur Versorgung von Tieren mit Futter, gemäß Anspruch 1, umfassend die Schritte:
a) Schließen des Hauptventils (4), welches die Zufuhr eines Futtermittels über die Pumpe (3) in der Ringleitung (13) regelt, welche sich von einem Futtertank (1) über die Ausläufe zu einer Mehrzahl an Futterstellen erstreckt, und der Futterstellenventile sowie Öffnen des Vorlaufventils (8) und des Rücklaufventils (9);
b) Erstes Durchspülen der Ringleitung (13) mit einem Fluid, so dass Futterreste aus der Ringleitung (13) in den Futtertank (1) geblasen werden;
c) Schließen des Rücklaufventils (9) und Öffnen der Futterstellenventile (10);
d) Zweites Durchspülen der Ringleitung (13) mit einem Fluid, so dass das Fluid über die Ausläufe in je eine der Trogschüsseln (12) geblasen wird, welche direkt unter dem jeweiligen Auslauf eine im Wesentlichen konische Erhebung aufweist.

## Claims

1. An arrangement for supplying animals with feed, comprising:
a) at least one feed tank (1) for holding a volume of feed, wherein the feed tank (1) is operatively connected to at least one pump (3) for conveying the feed;
b) at least one ring line (13) opening into the feed tank (1), with a supply valve (8), a return valve (9) arranged downstream the supply valve (8) in a feed distribution direction, and having a plurality of outlets for the feed arranged between the supply valve (8) and the return valve (9), wherein the outlets are each connected via a feed point valve (10) to a discharge pipe (11) opening into a trough bowl (12);
c) a main valve (4) for controlling the transportation of the feed from the feed tank (1) to the ring line (13), wherein the main valve (4) is located downstream of the pump (3) and upstream of the supply valve (8);
d) a compressed air supply with a compressed air valve (5) for controlling the supply of compressed air to the ring line (13) and/or a water supply with a water injection valve (6) for controlling the supply of water to the ring line (13), wherein the compressed air supply and/or the water supply is located downstream of the main valve (4) and upstream of the supply valve (8),
e) wherein, when the supply valve (8) is open, the return valve (9) is open and the main valve (4) is closed, a residue of feed is blown into the feed tank (1) when a fluid flows through the ring pipe (13);
**characterized in that** the discharge pipe (11) is arranged essentially perpendicular to the trough bowl (12) and the trough bowl (12) has an essentially conical elevation pointing towards an opening of the discharge pipe (11), wherein, when the return valve (9) is closed, the main valve (4) is closed, the supply valve (8) is open and the feed point valve (10) is open, a residue of feed in the trough bowl (12) is blown out of the trough bowl (12) by a fluid being admitted via the opening of the discharge pipe (11) onto the essentially conical elevation of the trough bowl (12).

2. A method for cleaning an arrangement for supplying animals with feed, according to claim 1, comprising the steps of:
a) closing the main valve (4) which controls the supply of feed via the pump (3) in the ring line (13) which extends from a feed tank (1) via the outlets to a plurality of feed points, and the feed point valves, and opening the supply valve (8) and the return valve (9);
b) first rinsing of the ring line (13) with a fluid so that feed residues are blown out of the ring line (13) into the feed tank (1);
c) closing the return valve (9) and opening the feed point valves (10);
d) second rinsing of the ring line (13) with a fluid, so that the fluid is blown via the outlets into one of the trough bowls (12) in each case, which has a substantially conical elevation directly below the respective outlet.

## Revendications

1. Dispositif pour l'approvisionnement d'animaux en nourriture, comprenant :
a) au moins un réservoir de nourriture (1) pour le logement d'un volume de nourriture, dans lequel le réservoir de nourriture (1) est relié de manière fonctionnelle avec au moins une pompe (3) pour le transport de la nourriture ;
b) au moins une conduite annulaire (13) débouchant dans le réservoir de nourriture (1), avec une soupape aller (8), une soupape retour (9) disposée, dans une direction de distribution de la nourriture, après la soupape aller (8) et une pluralité de sorties pour la nourriture, disposées entre la soupape aller (8) et la soupape retour (9), dans lequel les sorties sont reliées chacune, par l'intermédiaire d'une soupape de point de nourriture (10), avec un tuyau de sortie (11) débouchant dans une auge (12) ;
c) une soupape principale (4) pour la régulation du transport de la nourriture du réservoir de nourriture (1) vers la conduite annulaire (13), dans lequel la soupape principale (4) est disposée en aval de la pompe (3) et en amont de la soupape aller (8) ;
d) une entrée d'air comprimé avec une soupape d'air comprimé (5) pour la régulation d'une introduction d'air comprimé dans la conduite annulaire (13) et/ou une entrée d'eau avec une soupape d'injection d'eau (6) pour la régulation de l'introduction d'eau dans la conduite annulaire (13), dans lequel l'entrée d'air comprimé et/ou l'entrée d'eau est disposée en aval de la soupape principale (4) et en amont de la soupape aller (8) ;
e) dans lequel, lorsque la soupape aller (8) est ouverte, la soupape retour (9) est ouverte et la soupape principale (4) est fermée, un résidu de nourriture est soufflé avec un fluide dans le réservoir de nourriture (1) lors de la traversée de la conduite annulaire (13) ;
**caractérisé en ce que** le tuyau de sortie (11) est disposé de manière globalement perpendiculaire à l'auge (12) et l'auge (12) présente un bossage globalement conique orienté vers une embouchure du tuyau de sortie (11), dans lequel, lorsque la soupape retour (9) est fermée, la soupape principale (4) est fermée, la soupape aller (8) est ouverte et la soupape de point de nourriture (10) est ouverte, un résidu de nourriture dans l'auge (12) est soufflé hors de celle-ci par la sollicitation par un fluide à travers l'embouchure du tuyau de sortie (11) vers le bossage globalement conique de l'auge (12).

2. Procédé de nettoyage d'un dispositif pour l'approvisionnement d'animaux en nourriture, selon la revendication 1, comprenant les étapes suivantes :
a) fermeture de la soupape principale (4) qui régule l'introduction d'un aliment par l'intermédiaire de la pompe (3) dans la conduite annulaire (13), qui s'étend d'un réservoir de nourriture (1) à une pluralité de points de nourriture en passant par les sorties et des soupapes de points de nourriture ainsi que de la soupape aller (8) et de la soupape retour (9) ;
b) premier rinçage de la conduite annulaire (13) avec un fluide, de sorte que les résidus de nourriture sont soufflés hors de la conduite annulaire (13) vers le réservoir de nourriture (1) ;
c) fermeture de la soupape retour (9) et ouverture des soupapes de points de nourriture (10) ;
d) deuxième rinçage de la conduite annulaire (13) avec un fluide, de sorte que le fluide est soufflé par les sorties dans chacune des auges (12), qui présentent, directement sous leurs sorties respectives, un bossage globalement conique.
